# EUROPÄISCHE PATENTSCHRIFT

(11) **EP 2 878 406 B1**
(45) Veröffentlichungstag und Bekanntmachung des Hinweises auf die Patenterteilung: **26.04.2017**
(21) Anmeldenummer: 14190624.8
(22) Anmeldetag: 28.10.2014
(51) Int. Cl.: B23D 45/12, B23D 47/04

(54) **Kappsäge zum Schneiden der Ringendflächen eines Rohrbogenstücks**
Chop saw for cutting the ring end surfaces of a pipe elbow piece
Scie pivotante pour couper des surfaces d'extrémité annulaires d'un coude de tube

(30) Priorität: 28.11.2013 DE 102013019893
(43) Veröffentlichungstag der Anmeldung: 03.06.2015
(73) Patentinhaber: Ramm, Klaus-Hermann, 24791 Neu-Duvenstedt (DE)
(72) Erfinder: Ramm, Klaus-Hermann, 24791 Neu-Duvenstedt (DE)
(74) Vertreter: Lobemeier, Martin Landolf

(56) Entgegenhaltungen:
- WO-A1-93/18881
- US-A- 3 881 385

## Beschreibung

### Vorrichtung zum Schneiden der Ringendflächen eines Rohrbogenstücks

Die Erfindung betrifft eine Kappsäge zum Schneiden der Ringendflächen eines Rohrbogenstücks gemäß dem Oberbegriff des Anspruchs 1. Eine solche Kappsäge ist der DE 10 2006 059 752 zu entnehmen.

Bei der Verwendung von Rohrbogenendstücken ist ein manuelles Zuschneiden mit der erforderlichen Genauigkeit schwierig. Aus der DE 10 2006 059 752 ist eine Kappsäge bekannt, die trotz eines komplizierten Aufbaus ein bequemes Schneiden der Ringendflächen eines Rohbogenstücks nicht erlaubt.

Der Erfindung liegt die Aufgabe zugrunde, eine Vorrichtung zu schaffen, die das schnelle und genaue Schneiden der Ringendflächen eines Rohrbogenstücks erlaubt.

Erfindungsgemäß wird diese Aufgabe gelöst durch die Merkmale des Anspruchs 1.

Bei einer bevorzugten Ausführungsform ist der Schlitten mit einem kreissegmentförmigen Abschnitt versehen, dessen Mittelpunkt mit der vertikalen Schwenkachse zusammenfällt und der mit einer das Maß seines Verschwenkens der Aufnahme angegebenen Gradskala versehen ist. Weiter kann eine das Maß des Verschiebens des Schlittens relativ zu der Ebene des Sägeblatts angebenden Streckenskala versehen sein.

Die austauschbare Aufnahme ist vorzugsweise mit einer ein Einklemmen des zu beschneidenden Rohrbogensstücks erlaubenden Klemmeinrichtung versehen.

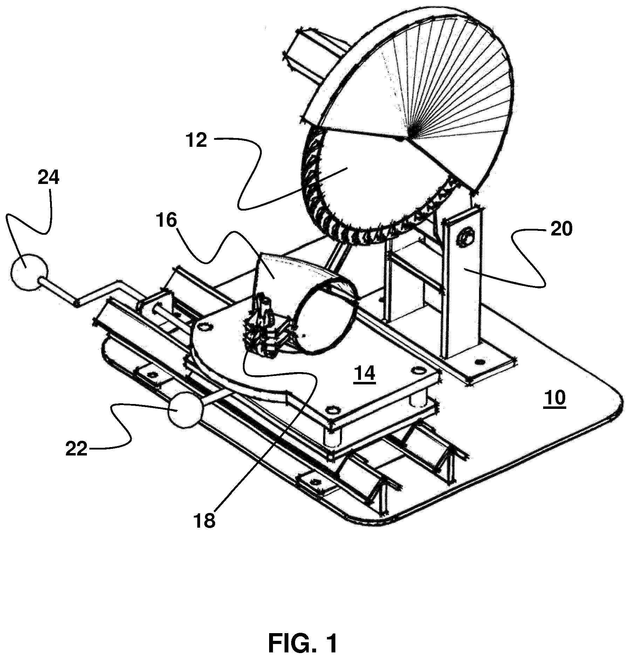

Die Erfindung wird anhand des in der einzigen Fig. 1 dargestellten, besonders bevorzugt ausgebildeten Ausführungsbeispiels näher erläutert:
Die Vorrichtung besteht aus einem Tisch 10, einer auf dem Tisch 10 in einer zu der Ebene des Tisches 10 senkrechten Ebene montierten Sägeblatt 12 sowie einem auf dem Tisch 10 montierten Schlitten 14.

Der Schlitten 14 ist mit einer Rohrbogenaufnahme 16 versehen, der entsprechend dem Durchmesser des zu beschneidenden Rohrbogenstücks ausgewählt werden kann. Der Schlitten 14 ist in einer Ebene, die rechtwinklig zu der Ebene des Sägeblatts 12 verläuft, verschieblich, wobei die Aufnahme 16 in ihrer Ebene relativ zum Tisch 10 um eine in der Ebene des Sägeblatts 12 liegende vertikale Achse verschwenkbar eingerichtet ist.

Dargestellt ist weiter ein Griff 22, der auf eine auf den Schlitten 14 wirkenden Feststelleinrichtung wirkt. Bei der Betätigung des Griffs 22 wird die Aufnahme 16 in der jeweils gewünschten Stellung blockiert. Die jeweilige Winkelstellung der Aufnahme 16 und damit des Rohrstücks relativ zu der Ebene des Sägeblatts 12 kann an einer Gradskala, die an einem kreissegmentförmigen Abschnitt des Schlittens 14 angeordnet ist, abgelesen werden.

Ein weiterer Griff 24 dient als Kurbel zum Verschieben des Schlittens 14 in einer zu der Ebene des Sägeblatts 12 senkrechten Ebene.

Die austauschbare Rohrbogenaufnahme 16 ist mit einer ein Einklemmen des zu beschneidenden Rohrbogensstücks erlaubenden Klemmeinrichtung 18 versehen.

Die hier vorgeschlagene Vorrichtung erlaubt es, ein Rohrbogenstück auf einfache Weise und mit hoher Genauigkeit auf den Winkel zuzuschneiden, unter dem die Ebenen der zu schneidenden Ringflächen des Rohrbogenstücks sich schneiden sollen.

## Patentansprüche

1. Kappsäge zum Schneiden der Ringendflächen eines Rohrbogenstücks mit einem Tisch (10) und einem in einer zu der des Tisches (10) senkrechten Ebene angeordneten Sägeblatt (12), **dadurch gekennzeichnet, dass** der Tisch (10) einen Schlitten (14) trägt, der mit einer dem zu schneidenden Rohrbogen entsprechend austauschbaren Rohrbogenaufnahme (16) versehen ist und der in einer rechtwinklig zu der Ebene des Sägeblatts (12) verlaufenden Ebene verschieblich ist, und wobei auf dem Schlitten (14) die Rohrbogenaufnahme (16) um eine zur Ebene des Sägeblatts (12) parallele, zum Tisch (10) vertikale Achse verschwenkbar ist.

2. Kappsäge nach Anspruch 1, **dadurch gekennzeichnet, dass** der Schlitten (14) mit einem kreis segmentformigen Abschnitt versehen ist, dessen Mittelpunkt mit der vertikalen Schwenkachse zusammemällt und der mit einer das Maß des Verschwenkens des Schlittens (14) bzw. der Aufnahme (16) angebenden Gradskala versehen ist.

3. Kappsäge nach Anspruch 1 oder 2, **dadurch gekennzeichnet, dass** der Schlitten (14) mit einer das Maß seines Verschiebens angebenden Streckenskala versehen ist.

4. Kappsäge nach einem der vorangehenden Ansprüche, **dadurch gekennzeichnet, dass** die austauschbare Rohrbogenaufnahme (16) mit einer ein Einklemmen des zu schneidenden Rohres erlaubenden Klemmeinrichtung (18) versehen ist.

## Claims

1. Mitre saw for cutting the ring end surfaces of a pipe bend section, with a table, (10) and a sawblade (12) arranged in a level perpendicular to the table (10),
**characterised in that**
the table (10) carries a carriage (14) applied with a pipe bend holder (16) that can be replaced according to the pipe bend to be cut and that can be moved on a level that is at a right angle to the level of the sawblade (12), and in which the pipe bend holder (16) on the carriage (14) can be turned around an axis that is parallel to the level of the sawblade (12) and perpendicular to the table (10).

2. Mitre saw according to claim 1, **characterised in that** the carriage (14) is applied with a circle-segment section the centre of which coincides with the vertical swivel axis and that is applied with a scale of degrees indicating how far the carriage (14) or the holder (16) is turned.

3. Mitre saw according to claim 1 or 2, **characterised in that** the carriage (14) is applied with a path scale indicating the distance of its movement.

4. Mitre saw according to one of the above claims, **characterised in that** the replaceable pipe bend holder (16) is applied with a clamp (18) permitting clamping of the tube to be cut.

## Revendications

1. Tronçonneuse permettant de couper les extrémités d'un tuyau coudé, et dotée d'un plateau (10) et d'une lame (12) située verticalement par rapport au plateau (10),
**caractérisée en ce que**
le plateau (10) porte un chariot (14) doté d'un support pour tuyau coudé (16) correspondant au tuyau coudé à couper et qui coulisse sur un plan perpendiculaire à la surface de la lame (12), à savoir que sur le chariot (14) se trouve le support pour tuyau coudé (16), pivotant, et entourant un axe orienté parallèlement par rapport à la surface de la lame (12) et vertical par rapport au plateau (10).

2. Tronçonneuse selon la Revendication 1, **caractérisée en ce que** le chariot (14) est doté d'une partie en forme de secteur de cercle, dont le point central correspond à l'axe de pivotement vertical et qui est doté d'une échelle graduée indiquant le degré d'inclinaison du chariot (14) / du support (16).

3. Tronçonneuse selon la Revendication 1 ou 2, **caractérisée en ce que** le chariot (14) est équipé d'une échelle graduée indiquant le degré de décalage.

4. Tronçonneuse selon une des revendications précédentes, **caractérisée en ce que** le support interchangeable pour le tuyau coudé (16) est équipé d'un dispositif de serrage (18) permettant le blocage du tuyau à couper.
